Europäisches Patentamt

European Patent Office

Office européen des brevets

(19)

(11) **EP 1 104 389 B1**

(12) **FASCICULE DE BREVET EUROPEEN**

(45) Date de publication et mention
de la délivrance du brevet:
**11.12.2002 Bulletin 2002/50**

(21) Numéro de dépôt: **99936695.8**

(22) Date de dépôt: **05.08.1999**

(51) Int Cl.$^7$: **B64C 27/00**, B64C 27/46,
B64C 27/467

(86) Numéro de dépôt international:
**PCT/FR99/01940**

(87) Numéro de publication internationale:
**WO 00/009393 (24.02.2000 Gazette 2000/08)**

(54) **PROCEDE POUR LA REDUCTION DU BRUIT D'INTERACTION PALES-TOURBILLONS ENGENDRE PAR UNE VOILURE TOURNANTE**

VERFAHREN ZUR VERMINDERUNG EINES DREHFLÜGELERZEUGTEM BLATT-WIRBELGERÄUSCHES

METHOD FOR REDUCING BLADE-VORTEX INTERACTION NOISE GENERATED BY A ROTARY WING

(84) Etats contractants désignés:
**DE FR GB IT**

(30) Priorité: **17.08.1998 FR 9810467**

(43) Date de publication de la demande:
**06.06.2001 Bulletin 2001/23**

(73) Titulaire: **ONERA (Office National d'Etudes et de Recherches Aérospatiales)
92320 Châtillon (FR)**

(72) Inventeur: **RAHIER, Gilles
F-92350 Le Plessis Robinson (FR)**

(74) Mandataire: **Bonnetat, Christian
CABINET BONNETAT
29, rue de St. Pétersbourg
75008 Paris (FR)**

(56) Documents cités:
**US-A- 5 588 800**

• **ARIYUR K B, KRSTIC M: "Feedback Attenuation and Adaptive Cancellation of Blade Vortex Interaction Noise on a Helicopter Blade Element" PROCEEDINGS OF THE 1998 AMERICAN CONTROL CONFERENCE, vol. 2, 24 - 26 juin 1998, pages 1053-1057, XP002101522 Philadelphia, PA, USA**
• **YU Y H, GMELIN B, SPLETTSTOESSER W, PHILIPPE J J, PRIEUR J, BROOKS T F: "Reduction of Helicopter Blade-Vortex Interaction Noise by Active Rotor Control Technology" PROGRESS IN AEROSPACE SCIENCES, vol. 33, no. 9-10, septembre 1997 (1997-09) - octobre 1997 (1997-10), pages 647-687, XP002101523**
• **"SMART HUSH HELICOPTERS" MACHINE DESIGN, vol. 66, no. 15, 8 août 1994 (1994-08-08), pages 36-38, XP000460769**

EP 1 104 389 B1

**Description**

La présente invention concerne un procédé pour la réduction du bruit d'interaction pales-tourbillons -généralement appelé bruit BVI dans la technique- engendré par une voilure tournante.

On sait que, lors de vols à basse vitesse, notamment en descente avant l'atterrissage, les pales d'un rotor d'hélicoptère ou d'un aéronef analogue évoluent à proximité de leur propre sillage et entrent en interaction avec les tourbillons qu'elles ont émis au voisinage de leur extrémité et qui sont généralement appelés "tourbillons d'extrémité". Ces interactions créent de brusques variations de pression sur les pales avec une amplitude d'autant plus forte que le tourbillon est plus intense et passe plus près de la pale. Ces variations de pression sont des sources de bruit élevé dans une bande de fréquence particulièrement audible. Comme le bruit d'interaction pales-tourbillons rayonne vers le bas et l'avant, c'est-à-dire vers les riverains des héliports, il constitue l'une des nuisances acoustiques de l'hélicoptère les plus pénalisantes pour son développement. Sa réduction est aujourd'hui un enjeu industriel majeur, notamment en raison du renforcement des normes internationales en matière de nuisances acoustiques.

Afin de réduire l'intensité du bruit BVI, on connaît essentiellement deux actions, consistant respectivement à diminuer l'intensité des tourbillons d'extrémité des pales et à éloigner lesdits tourbillons desdites pales. Ces actions peuvent être conjuguées et mises en oeuvre par des moyens passifs ou actifs.

Par exemple, les documents FR-A-2 636 593, EP-A-0 482 932 et WO 97/07019 décrivent de tels moyens passifs, formés par des géométries de pales, notamment d'extrémités de pales, destinées à réduire l'intensité desdits tourbillons.

De tels moyens passifs sont optimisés pour une configuration de vol donnée. Ils ont l'avantage d'une certaine simplicité technologique. En revanche, leur efficacité peut dépendre fortement de la configuration de vol. En effet, les conditions du bruit BVI changent en fonction de la vitesse de vol et de l'angle de descente de l'hélicoptère. De plus, les techniques proposées sont inutiles dans les configurations de vol qui n'engendrent pas de bruit BVI et s'avèrent alors en général pénalisantes pour les performances aérodynamiques du rotor.

Des moyens actifs de réduction du bruit BVI sont par exemple décrits par les documents EP-A-0 689 990 et US-A-5 588 800. Le premier de ces documents met en oeuvre des jets d'air au bord de fuite et à l'extrémité des pales pour réduire l'intensité des tourbillons d'extrémité et les éloigner desdites pales. Le second utilise un volet de bord de fuite vers l'extrémité des pales, le braquage dudit volet étant périodique et défini pour accélérer la convection verticale des tourbillons d'extrémité et les éloigner ainsi desdites pales.

De tels moyens actifs sont techniquement plus complexes que lesdits moyens passifs, mais ils peuvent être réglés en fonction de la configuration de vol de l'aéronef. Ils peuvent donc n'être activés que lorsqu'ils sont utiles et être optimisés dans un domaine de vol plus étendu. En revanche, dans leur fonctionnement, ils ne comportent aucune relation réactive continue entre la configuration de vol -en conditions réelles de vol- et leur commande. Par ailleurs, leur fonctionnement nécessite une puissance importante. En particulier, dans le cas du dispositif du document US-A-5 588 800, il est nécessaire de fournir à la voilure tournante une puissance élevée, apte à faire osciller des volets aérodynamiques à des fréquences de l'ordre de 20 Hz avec des amplitudes de plusieurs degrés.

La présente invention a pour objet de remédier à ces inconvénients. Elle concerne un moyen actif de réduction du bruit BVI du type à volets de bord de fuite, dont le braquage peut être asservi aux conditions réelles de vol et qui ne nécessite qu'une puissance relativement faible pour son fonctionnement.

A cette fin, selon l'invention, le procédé pour la réduction du bruit engendré par la voilure tournante d'un aéronef, tel qu'un hélicoptère, du fait que, au cours de la rotation de ladite voilure tournante et de l'avance dudit aéronef, chaque pale composant ladite voilure tournante rencontre le tourbillon d'extrémité engendré par une pale précédente, ledit procédé mettant en oeuvre au moins un volet de bord de fuite disposé vers l'extrémité extérieure de chacune desdites pales, est remarquable en ce que :

- on détermine au moins une valeur $\Psi$o de l'azimut des pales, pour laquelle lesdites pales émettent des tourbillons d'extrémité responsables d'une pointe d'intensité dudit bruit ;
- on détermine la section de chaque pale autour de laquelle la circulation de vitesse est maximale ;
- sur chaque pale, on dispose ledit volet de bord de fuite pour qu'il engendre au moins un tourbillon auxiliaire, parallèle audit tourbillon d'extrémité et attaché à une section de ladite pale comprise entre ladite section autour de laquelle la circulation de vitesse est maximale et la section d'extrémité de ladite pale ; et
- on applique à chacun desdits volets un braquage dont la valeur est constante en azimut, mais est telle que, pour ladite valeur $\Psi$o de l'azimut, la circulation de vitesse autour de ladite section de pale à laquelle est attaché ledit tourbillon auxiliaire est une fraction déterminée de ladite circulation de vitesse maximale.

La présente invention est basée sur le fait que le bruit BVI n'est pas engendré de façon uniforme autour de l'axe de rotation de la voilure tournante, et que, pendant chaque cycle de rotation, chaque pale de la voilure tournante émet des tourbillons dont les caractéristiques, telles qu'emplacement d'émission, dimension, intensité etc ... sont liées à la charge et à la géométrie des pales.

La Demanderesse a notamment constaté que les tourbillons d'extrémité de pales responsables du bruit BVI dominant sont émis par les pales -quel que soit le nombre de celles-ci composant la voilure tournante- à un azimut déterminé, généralement compris entre 120° et 150° et souvent voisin de 130°, comptés dans le sens de rotation des pales à partir de l'azimut 0°, qui correspond à la partie arrière de l'axe longitudinal de l'aéronef. Le bruit BVI comporte donc, pendant chaque cycle de rotation, au moins une pointe d'intensité correspondant à l'interaction avec les tourbillons d'extrémité émis à cet azimut déterminé.

La valeur $\Psi$o de l'azimut, ainsi que la section de chaque pale autour de laquelle la circulation de vitesse est maximale peuvent être déterminées par le calcul ou par des essais.

Ainsi, grâce à la présente invention, à l'azimut $\Psi$o et aux azimuts voisins de $\Psi$o, les pales de la voilure tournante émettent plusieurs tourbillons plus faibles que le tourbillon unique qui serait émis en extrémité de pales en l'absence de mise en oeuvre de l'invention. Celle-ci permet donc de diviser chacun de ces tourbillons uniques en plusieurs tourbillons de circulation de vitesse plus faible et non à les éloigner des pales suivantes. Il en résulte une réduction d'une partie dominante du bruit BVI.

Bien entendu, dans le cas où cela est nécessaire, il est possible d'appliquer le procédé conforme à la présente invention non pas à une seule valeur privilégiée $\Psi$o de l'azimut des pales, mais à plusieurs valeurs $\Psi$o1, $\Psi$o2, ..., $\Psi$on de l'azimut auxquelles les tourbillons d'extrémité émis seraient cause de bruit BVI.

De même, conformément à la présente invention, il est possible de mettre en oeuvre plus d'un volet de bord de fuite par pale, afin de diviser l'émission tourbillonnaire en une pluralité de tourbillons auxiliaires. Cependant, on risque dans ce cas que des tourbillons auxiliaires trop proches puissent se recombiner en un tourbillon unique.

Aussi, dans un mode de mise en oeuvre préféré de la présente invention :

- on met en oeuvre un unique volet de bord de fuite par pale ;
- ladite section à laquelle est attaché ledit tourbillon auxiliaire se trouve au moins approximativement à mi-distance entre ladite section autour de laquelle la circulation de vitesse est maximale et ladite section d'extrémité de ladite pale ; et
- la circulation de vitesse autour de la section de pale à laquelle est attaché ledit tourbillon auxiliaire est au moins approximativement égale à la moitié de ladite circulation de vitesse maximale.

Ainsi, chaque pale émet, à la valeur $\Psi$o de l'azimut et au voisinage de cette valeur, deux tourbillons dont la circulation est voisine de la moitié de celle d'un tourbillon unique en extrémité de pale. On a constaté que cette répartition de l'émission tourbillonnaire en deux tourbillons semblables, au voisinage d'une unique valeur $\Psi$o de l'azimut des pales à laquelle sont émis les tourbillons d'extrémité responsables du bruit BVI dominant, entraînait une réduction dudit bruit BVI de l'ordre de 7 dB.

Bien entendu, lesdits volets peuvent être actionnés par tous moyens mécaniques, électriques, pneumatiques ou hydrauliques connus.

On remarquera que, dans le procédé conforme à la présente invention, le braquage du ou des volets à la ou aux valeurs $\Psi$o de l'azimut des pales dépend de la charge des pales auxdites valeurs d'azimut, puisque mettant en oeuvre la circulation de vitesse autour des sections desdites pales.

Chaque pale de la voilure tournante peut comporter un volet de bord de fuite qui s'étend jusqu'à la section d'extrémité de pale. Si ladite pale ne comporte que ce seul volet, ce dernier s'étend donc entre ladite section d'extrémité de pale et la section de pale se trouvant approximativement à mi-distance entre ladite section autour de laquelle la circulation de vitesse est maximale et ladite section d'extrémité de pale. Dans ce cas, le volet unique de bord de fuite engendre deux tourbillons semblables attachés à ses extrémités.

En variante, chaque pale de la voilure tournante peut comporter un volet de bord de fuite qui est séparé de ladite section d'extrémité de pale par une portion d'extrémité de ladite pale. Si ladite pale ne comporte que ce seul volet, ladite portion d'extrémité de pale s'étend entre ladite section d'extrémité de pale et la section de pale se trouvant approximativement à mi-distance entre ladite section autour de laquelle la circulation de vitesse est maximale et ladite section d'extrémité de pale. Dans ce cas, il apparaît trois tourbillons, l'un attaché à ladite section d'extrémité et les deux autres attachés aux extrémités dudit volet de bord de fuite. Pour éviter que le tourbillon attaché à l'extrémité intérieure du volet interfère avec les deux autres et/ou soit la cause de bruit, il est alors avantageux que l'envergure dudit volet soit relativement grande par exemple au moins égale à 3 C (C étant la corde du profil de la pale), de façon que ladite extrémité intérieure du volet, et donc le tourbillon qui y est attaché, soit écartée des deux autres tourbillons, en direction de l'axe de ladite voilure tournante.

Il est cependant avantageux que chaque pale ne soit équipée que d'un seul volet placé en extrémité de ladite pale, d'envergure compris entre 0,4 C et 3 C, de préférence égale à 1,2 C.

Quelle que soit la disposition desdits volets sur les pales, il est avantageux que la profondeur desdits volets soit choisie entre 0,1 C et 0,4 C, de préférence égale à 0,25 C.

Pour mettre en oeuvre le procédé conforme à la présente invention, on peut utiliser des informations de portance, de pression ou de contrainte pour appréhender les circulations de vitesse autour de la section de pale à circulation maximale et de la section à mi-distance entre celle-ci et la section d'extrémité. Ces informations peuvent être délivrées par des capteurs et/ou calculées par un ordinateur de bord.

Ainsi, grâce à la présente invention, on peut piloter de façon aisée lesdits volets pour obtenir une réduction du bruit BVI, au moins celui dû aux tourbillons d'extrémité émis aux valeurs Ψo déterminées. A cet effet, on peut asservir l'angle de braquage α desdits volets.

Pour des raisons de puissance, il est préférable que l'asservissement ne concerne le braquage α desdits volets que pour une valeur Ψo déterminée.

Ainsi, un avantage important de la présente invention réside en ce qu'elle peut mettre en oeuvre des volets de bord de fuite de dimensions réduites avec une faible puissance. En effet, le braquage des volets n'est modifié que lors des changements de la configuration de vol. L'asservissement des volets donne donc lieu à des mouvements de faible amplitude sur des temps relativement longs (typiquement plusieurs dixièmes de seconde). Cette faible puissance permet l'emploi de commandes électriques et d'articulations en matériaux électriquement déformables pour les volets. Enfin, le réglage des volets peut s'effectuer indépendamment pour chaque pale, ce qui permet de s'affranchir ainsi d'éventuelles différences dans leurs caractéristiques et leur comportement.

Les figures du dessin. annexé feront bien comprendre comment l'invention peut être réalisée. Sur ces figures des références identiques désignent des éléments semblables.

La figure 1 illustre schématiquement le procédé de la présente invention.

La figure 2 montre les emplacements de capteurs de pression sur les pales de la voilure tournante.

La figure 3 est le schéma synoptique du dispositif de commande du volet montré sur la figure 2.

La figure 4 illustre schématiquement une variante de mise en oeuvre du procédé conforme à la présente invention.

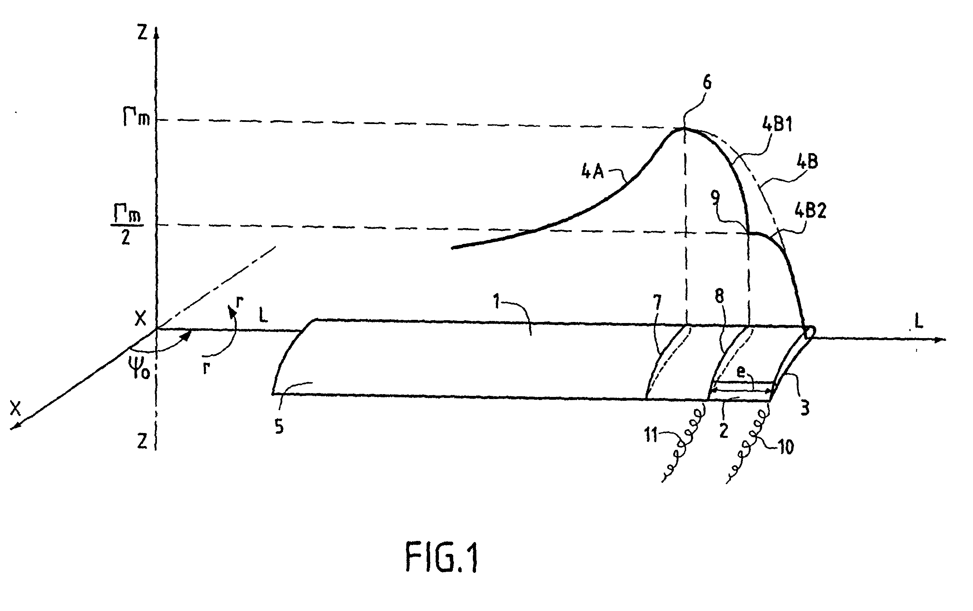

Sur la figure 1, on a représenté l'une des pales 1 d'une voilure tournante d'hélicoptère d'axe de rotation Z-Z, cette voilure tournante n'étant pas plus amplement représentée.

La pale 1, d'axe longitudinal L-L, tourne autour dudit axe de rotation Z-Z de la voilure tournante et, au cours d'une telle rotation, l'azimut Ψ de la pale 1 est mesuré dans le sens de rotation Z-Z à partir de la partie arrière X-X de l'axe longitudinal de l'hélicoptère (non représenté).

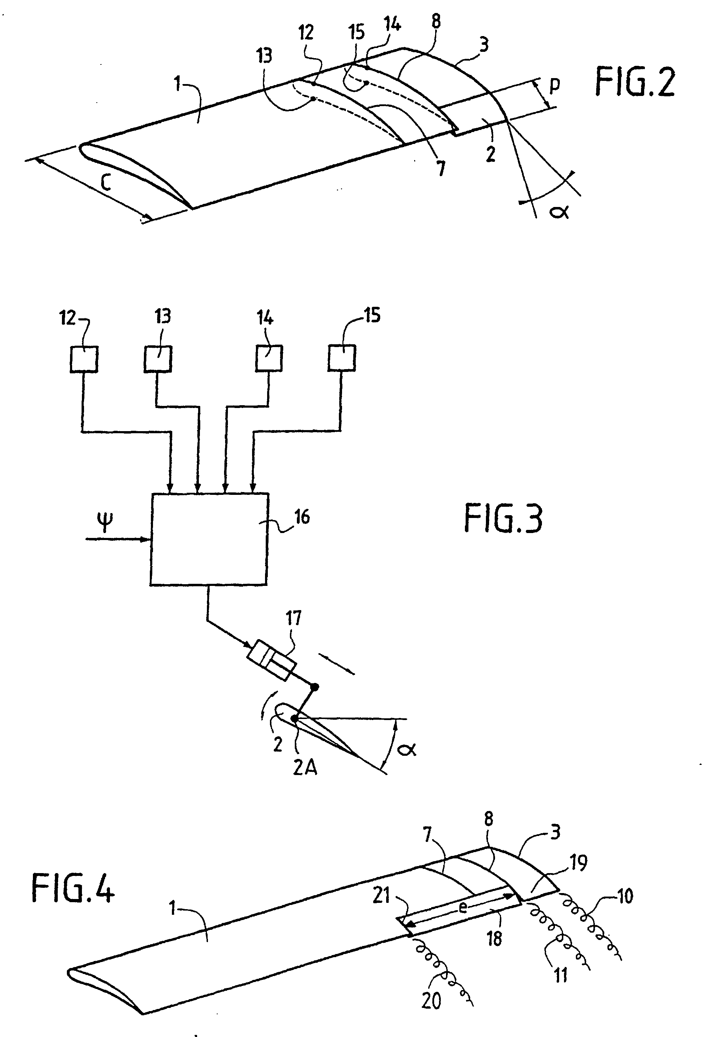

Par ailleurs, la pale 1 comporte un volet de bord de fuite 2 s'étendant jusqu'à la section d'extrémité extérieure 3 de la pale 1 et susceptible de pivoter autour de son axe 2A (voir la figure 3).

De façon connue, si le volet de bord de fuite 2 n'existait pas, la circulation de vitesse autour de pale 1 présenterait le long de l'envergure L-L de celle-ci, l'allure de la courbe 4A, 4B, représentée dans le système d'axes L-L, Z-Z. La courbe 4A, 4B présente une partie 4A croissant du pied de pale 5 de ladite pale 1 en direction de la section d'extrémité 3 de celle-ci et passant par un maximum 6 et une partie en arc 4B décroissant depuis ledit maximum 6 jusqu'à une valeur nulle à la section d'extrémité de pale 3. Au maximum 6, correspond la section de pale 7 autour de laquelle la circulation de vitesse Γ prend la valeur maximale Γm. De façon également connue, c'est cette partie décroissante 4B de la courbe 4A, 4B qui engendre en extrémité de la pale 1 un tourbillon générateur de bruit BVI.

Aussi, selon l'invention, à au moins une valeur Ψo de l'azimut Ψ à laquelle le tourbillon d'extrémité est la cause d'une pointe d'intensité du bruit BVI, on modifie la partie 4B de la courbe 4A, 4B au moyen du volet de bord de fuite 2. En règle générale, au moins une valeur Ψo est comprise entre 120° et 150° et, encore plus généralement, cette valeur Ψo est voisine de 130°.

On choisit l'envergure e du volet 2, pour que celui-ci s'étende approximativement de la section de pale 8 se trouvant approximativement à mi-distance entre la section de circulation de vitesse maximale 7 et la section d'extrémité 3.

De cette façon, on peut appliquer au volet de bord de fuite 2 un braquage α dont la valeur est constante en azimut Ψ, mais qui, pour la valeur Ψo, permet de transformer la partie 4B de ladite courbe 4A, 4B, pour lui donner la forme des deux arcs consécutifs décroissants 4B1 et 4B2. L'arc 4B1 décroît depuis le maximum 6, correspondant à la section de pale 7 autour de laquelle la circulation de vitesse est maximale et égale à Γm, jusqu'à un point 9 correspondant à la section de pale 8 autour de laquelle la circulation de vitesse est alors au moins approximativement égale à ½ x Γm. L'arc 4B2 décroît, quant à lui, depuis ledit point 9 jusqu'à la valeur nulle à la section d'extrémité 3.

Par suite, grâce à l'action du volet de bord de fuite 2, il apparaît, vers l'extrémité de pale 1, pour la valeur d'azimut Ψo et au voisinage de cette valeur, deux tourbillons semblables 10 et 11 respectivement attachés à la section d'extrémité 3 et à la section 8, la circulation de vitesse desdits tourbillons étant égale à ½ x Γm. Par suite, on obtient une réduction importante (plusieurs décibels) du bruit BVI dû aux tourbillons émis autour de la valeur Ψo de l'azimut.

Comme on le sait, la circulation de vitesse autour d'une section de pale est proportionnelle au coefficient de portance de cette section, qui lui-même est une fonction de la différence de pression entre l'intrados et l'extrados de ladite section.

Aussi, comme cela est représenté schématiquement par les figures 2 et 3, pour mettre en oeuvre le procédé on peut disposer :

.   dans la section de pale 7 ou au voisinage de celle-ci, au moins un capteur de pression 12 à l'extrados de la pale 1 et au moins un capteur de pression 13 à l'intrados de cette dernière ;

. dans la section de pale 8 ou au voisinage de celle-ci, au moins un capteur de pression 14 à l'extrados de ladite pale 1 et au moins un capteur de pression 15 à l'intrados de cette dernière.

Un calculateur 16, recevant les signaux émis par les capteurs 12 à 15, et connaissant en continu l'azimut Ψ des pales 1, peut donc calculer à la valeur Ψo dudit azimut et au voisinage de cette dernière valeur, les coefficients de portance respectifs de la section 7 et de la section 8. A l'aide de ces coefficients de portance, le calculateur 16 calcule la circulation de vitesse $\Gamma 7 = \Gamma m$ autour de la section de pale 7 et la circulation de vitesse $\Gamma 8$ autour de la section de la pale 8 et il engendre un ordre de braquage qu'il adresse à un actionneur 17, commandant le braquage du volet 2. Dans l'exemple de réalisation de la figure 1, cet ordre de braquage est tel que la circulation de vitesse $\Gamma 8$ soit égale à la moitié de la circulation de vitesse $\Gamma 7$.

L'ordre de braquage pourrait être une valeur calculée (par le calculateur 16) de l'angle de braquage $\alpha$. Cet ordre de braquage peut également être la variation $d\alpha/dt$ dudit angle de braquage par rapport au temps t. Un tel ordre de braquage approprié au procédé de la figure 1 peut être de la forme

$$d\alpha/dt = K\ (\Gamma 7 - 2\Gamma 8)$$

expression dans laquelle K est un coefficient constant.

On remarquera que, lorsque l'aéronef à voilure tournante comporte un ordinateur de vol, celui-ci est capable de calculer, à partir des conditions de vol (charge, vitesse, taux de montée ou de descente,...) et du type de la pale 1, la distribution en envergure des efforts de portance et donc la circulation de vitesse autour des sections 7 et 8. Dans ce cas, les capteurs 12 à 15 pourraient être supprimés, ou bien être utilisés pour corroborer les résultats des calculs de l'ordinateur de vol.

On remarquera que les mesures ou les calculs de $\Gamma 7$ et $\Gamma 8$ sont effectuées à chaque tour de chaque pale de sorte que l'on peut considérer que la commande des volets de bord de fuite 2 est un asservissement en boucle fermée.

On notera de plus que la circulation de vitesse autour des sections de pales 7 et 8 peut être déterminée indirectement par des mesures du moment de flexion local de la pale 1. Par suite, il est possible de remplacer les capteurs de pression 12 à 15 par des jauges de contraintes ou capteurs analogues susceptibles de mesurer de tels moments de flexion locaux.

De ce qui précède, on voit donc que le braquage des volets 2 peut être asservi, par une commande 16, 17 relativement simple, à des mesures locales et/ou des calculs de pression ou de contraintes locales, afin de maintenir une division équilibrée du tourbillon d'extrémité de pale, en deux tourbillons moindres 10 et 11, quelle que soit la configuration de vol et ses fluctuations.

Dans la variante de mise en oeuvre de l'invention représentée sur la figure 4, chaque pale 1 comporte, à la place du volet 2, un volet de bord de fuite 18, qui est séparé de la section d'extrémité de pale 3 par une portion d'extrémité 19 de cette pale 1. Cette portion d'extrémité de pale 19 s'étend entre ladite section d'extrémité de pale 3 et la section de pale 8 se trouvant au moins approximativement à mi-distance entre la section 7 autour de laquelle la circulation de vitesse est maximale et la section d'extrémité de pale 3. Dans ce cas, en plus des tourbillons 10 et 11, accrochés aux sections de pales 3 et 8, apparaît un tourbillon 20, accroché à l'extrémité intérieure 21 dudit volet 18. Pour que ce tourbillon 20 n'ait aucun effet bruyant, il suffit que l'envergure du volet 18 soit suffisamment grande, pour que ledit tourbillon 20 soit écarté de la section d'extrémité 3, en direction de l'axe de rotation Z-Z.

L'expérience montre qu'une telle condition est satisfaite lorsque l'envergure $\underline{e}$ du volet 18 est au moins égale à 3C, C étant la corde du profil de la pale 1.

L'expérience a montré qu'il était avantageux que la pale 1 ne soit équipée que d'un seul volet, d'envergure comprise entre 0,4 C et 3 C, de préférence de l'ordre de 1,2 C.

L'expérience a également montré qu'il était avantageux que la profondeur $\underline{p}$ des volets 2 et 18 soit comprise entre 0,1 C et 0,4 C, de préférence de l'ordre de 0,25 C.

**Revendications**

1.  Procédé pour la réduction du bruit engendré par la voilure tournante d'un aéronef, tel qu'un hélicoptère, du fait que, au cours de la rotation de ladite voilure tournante et de l'avance dudit aéronef, chaque pale (1) composant ladite voilure tournante rencontre le tourbillon d'extrémité engendré par une pale précédente, ledit procédé mettant en oeuvre au moins un volet de bord de fuite (2) disposé vers l'extrémité extérieure de chacune desdites pales, **caractérisé en ce que** :

    - on détermine au moins une valeur Ψo de l'azimut des pales (1), pour laquelle lesdites pales (1) émettent des tourbillons d'extrémité responsables d'une pointe d'intensité dudit bruit ;
    - on détermine la section (7) de chaque pale (1) autour de laquelle la circulation de vitesse est maximale ;
    - sur chaque pale (1), on dispose ledit volet de bord de fuite (2) pour qu'il engendre au moins un tourbillon auxiliaire (11), parallèle audit tourbillon d'extrémité (10) et attaché à une section (8) de ladite pale (1) comprise entre ladite section (7) autour de laquelle la circulation de vitesse est maximale et la section (3) d'extrémité de ladite pale ; et

- on applique à chacun desdits volets (2) un braquage dont la valeur est constante en azimut, mais est telle que, pour ladite valeur Ψo de l'azimut, la circulation de vitesse autour de ladite section de pale (8) à laquelle est attaché ledit tourbillon auxiliaire (11) est une fraction déterminée de ladite circulation de vitesse maximale.

2. Procédé selon la revendication 1, **caractérisé en ce que** :

- on met en oeuvre un unique volet de bord de fuite (2) par pale (1) ;
- ladite section (8) à laquelle est attaché ledit tourbillon auxiliaire (11) se trouve au moins approximativement à mi-distance entre ladite section (7) autour de laquelle la circulation de vitesse est maximale et ladite section d'extrémité (3) de ladite pale ; et
- la circulation de vitesse autour de la section de pale (8) à laquelle est attaché ledit tourbillon auxiliaire (11) est au moins approximativement égale à la moitié de ladite circulation de vitesse maximale.

3. Procédé selon l'une quelconque des revendications 1 ou 2, **caractérisé en ce que** ladite valeur Ψo de l'azimut des pales(1) est comprise entre 120° et 150°, comptés dans le sens de rotation des pales à partir de l'azimut 0° qui correspond à la partie arrière de l'axe longitudinal X-X de l'aéronef.

4. Procédé selon l'une quelconque des revendications 1 à 3, **caractérisé en ce que** chaque pale (1) comporte un volet de bord de fuite (2) qui s'étend jusqu'à la section d'extrémité de pale (3).

5. Procédé selon l'une quelconque des revendications 1 à 3, **caractérisé en ce que** chaque pale (1) comporte un volet de bord de fuite (18) qui est séparé de ladite section d'extrémité de pale (3) par une portion d'extrémité (19) de cette pale (1).

6. Procédé selon l'une quelconque des revendications 1 à 5, **caractérisé en ce que** la circulation de vitesse est représentée par des informations de portance.

7. Procédé selon l'une quelconque des revendications 1 à 5, **caractérisé en ce que** la circulation de vitesse est représentée par des informations de contrainte, mesurées sur lesdites pales.

8. Procédé selon les revendications 2 et 6, **caractérisé en ce que** lesdites informations de portance proviennent de mesures de pression effectuées sur lesdites pales et **en ce que**, à cet effet, des capteurs de pression sont disposés, dans lesdites pales, dans ladite section autour de laquelle la circulation de vitesse est maximale, ainsi que dans la section de pale se trouvant approximativement à mi-distance entre cette dernière section et la section d'extrémité de pale.

9. Procédé selon les revendications 2 et 7, **caractérisé en ce que** des jauges de contraintes ou analogues sont disposées, dans lesdites pales, dans ladite section autour de laquelle la circulation de vitesse est maximale, ainsi que dans la section de pale se trouvant approximativement à mi-distance entre cette dernière section et la section d'extrémité de pale.

10. Procédé selon l'une quelconque des revendications 2 à 9, **caractérisé en ce que** la loi de braquage desdits volets est du type :

$$d\alpha/dt = K\ (\Gamma 7 - 2\Gamma 8)$$

expression dans laquelle :

$d\alpha/dt$     représente la variation temporelle de l'angle de braquage $\alpha$ desdits volets

$\Gamma 7$     est la valeur maximale de la circulation de vitesse autour desdites pales, pour l'azimut Ψo,

$\Gamma 8$     est la valeur de la circulation de vitesse autour de la section de pale à laquelle est attaché ledit tourbillon auxiliaire (11) pour l'azimut Ψo, et

$K$     un coefficient constant.

**Patentansprüche**

1. Verfahren zur Minderung des Geräusches, das durch die Hubschraube eines Luftfahrzeugs, wie beispielsweise eines Hubschraubers, dadurch erzeugt wird, dass im Verlauf der Drehung der Hubschraube und bei der Vorwärtsbewegung des Luftfahrzeugs jedes Blatt (1), das Bestandteil der Hubschraube ist, den von einem vorausgehenden Blatt erzeugten Spitzenwirbel trifft, wobei das Verfahren mindestens eine Hinterkantenklappe (2) einsetzt, die in Richtung auf das äußere Ende eines jeden der Blätter angebracht ist, **dadurch gekennzeichnet, dass**:

- mindestens ein Wert Ψo des Azimuts der Blätter (1) bestimmt wird, für den die Blätter (1) Spitzenwirbel hervorbringen, die für eine Intensitätsspitze des Geräuschs verantwortlich sind;

- der Querschnitt (7) eines jeden Blattes (1) bestimmt wird, um den herum die Umströmgeschwindigkeit maximal ist;

- auf jedem Blatt (1) die Hinterkantenklappe (2) angeordnet wird, dass sie mindestens einen Hilfswirbel (11) erzeugt, der parallel zum Spitzenwirbel (10) ist und der an einem Querschnitt (8) des Blattes (1) zwischen dem Querschnitt (7), um den herum die Umströmgeschwindigkeit maximal ist, und dem Querschnitt (3) am Ende des Blattes hängt; und

- auf jede der Klappen (2) ein Einschlagen angewendet wird, dessen Wert über den Azimut konstant ist, der aber dergestalt ist, dass für den Wert $\Psi_o$ des Azimuts die Umströmgeschwindigkeit um den Blattquerschnitt (8), an dem der Hilfswirbel (11) hängt, einen festgelegten Teil der maximalen Umströmgeschwindigkeit beträgt.

2.  Verfahren nach Anspruch 1,
    **dadurch gekennzeichnet, dass**:

- eine einzige Hinterkantenklappe (2) pro Blatt (1) eingesetzt wird;

- der Querschnitt (8), an dem der Hilfswirbel (11) hängt, sich mindestens ungefähr auf halbem Abstand zwischen dem Querschnitt (7), um den herum die Umströmgeschwindigkeit maximal ist, und dem Querschnitt (3) am Ende des Blattes befindet; und

- die Umströmgeschwindigkeit um den Querschnitt (8) des Blattes, an dem der Hilfswirbel (11) hängt, mindestens ungefähr gleich der Hälfte der maximalen Umströmgeschwindigkeit ist.

3.  Verfahren nach einem der Ansprüche 1 oder 2, **dadurch gekennzeichnet, dass** der Wert $\Psi_o$ des Azimuts der Blätter (1) zwischen 120° und 150° liegt, gerechnet in Drehrichtung der Blätter vom Azimut 0° aus, welcher dem hinteren Teil der Längsachse X-X des Luftfahrzeugs entspricht.

4.  Verfahren nach einem der Ansprüche 1 bis 3, **dadurch gekennzeichnet, dass** jedes Blatt (1) eine Hinterkantenklappe (2) umfasst, die sich bis zum Querschnitt (3) am Ende des Blattes erstreckt.

5.  Verfahren nach einem der Ansprüche 1 bis 3, **dadurch gekennzeichnet, dass** jedes Blatt (1) eine Hinterkantenklappe (18) umfasst, die vom Querschnitt (3) am Ende des Blattes durch einen Endabschnitt (19) dieses Blattes (1) getrennt ist.

6.  Verfahren nach einem der Ansprüche 1 bis 5, **dadurch gekennzeichnet, dass** die Umströmgeschwindigkeit durch Informationen über den Auftrieb dargestellt wird.

7.  Verfahren nach einem der Ansprüche 1 bis 5, **dadurch gekennzeichnet, dass** die Umströmgeschwindigkeit durch Informationen über die Beanspruchung dargestellt wird, die auf den Blättern gemessen werden.

8.  Verfahren nach den Ansprüchen 2 und 6, **dadurch gekennzeichnet, dass** die Informationen über den Auftrieb von Druckmessungen auf den Blättern stammen, und dass zu diesem Zweck Druckmesswertgeber in den Blättern in dem Querschnitt, um den herum die Umströmgeschwindigkeit maximal ist, sowie in dem Blattquerschnitt, der sich ungefähr auf halbem Abstand zwischen letzterem Querschnitt und dem Querschnitt am Ende des Blattes befindet, angeordnet werden.

9.  Verfahren nach den Ansprüchen 2 und 7, **dadurch gekennzeichnet, dass** Dehnungsmesser oder dergleichen in den Blättern in dem Querschnitt, um den herum die Umströmgeschwindigkeit maximal ist, sowie in dem Blattquerschnitt, der sich ungefähr im halben Abstand zwischen letzterem Querschnitt und dem Querschnitt am Ende des Blattes befindet, angeordnet werden.

10. Verfahren nach einem der Ansprüche 2 bis 9, **dadurch gekennzeichnet, dass** das Gesetz für das Einschlagen der Klappen vom folgenden Typ ist:

$$d\alpha/dt = K(\Gamma 7 - 2\Gamma 8),$$

einem Ausdruck, in welchem:

$d\alpha/dt$ die zeitliche Änderung des Winkels $\alpha$ des Einschlagens der Klappen darstellt,

$\Gamma 7$ der Maximalwert der Umströmgeschwindigkeit um die Blätter für den Azimut $\Psi_o$ ist,

$\Gamma 8$ der Wert der Umströmgeschwindigkeit um den Blattquerschnitt ist, an dem der Hilfswirbel (11) für den Azimut $\Psi_o$ hängt, und

$K$ ein konstanter Koeffizient ist.

## Claims

1. Method for reducing the noise generated by the rotary wing of an aircraft, such as a helicopter, due to the fact that, in the course of the rotation of said rotary wing and of the advancing of said aircraft, each component blade (1) of said rotary wing encounters the tip vortex generated by a previous blade, said method implementing at least one trailing edge flap (2) disposed toward the outboard tip of each of said blades, **characterized in that**:

   - at least one value Ψo, of the azimuth of the blades (1) is determined, for which value said blades (1) shed tip vortices responsible for a peak intensity of said noise;
   - the section (7) of each blade (1) around which the speed circulation is a maximum is determined;
   - said trailing edge flap (2) is disposed on each blade (1) in such a way that the former generates at least one auxiliary vortex (11), parallel to said tip vortex (10) and attached to a section (8) of said blade (1) lying between said section (7) around which the speed circulation is a maximum and the tip section (3) of said blade; and
   - a deflection is applied to each of said flaps (2), its value being constant in azimuth, but such that, for said value Ψo of the azimuth, the speed circulation around said blade section (8) to which said auxiliary vortex (11) is attached is a specified fraction of said maximum speed circulation.

2. Method according to claim 1, **characterized in that**:

   - a single trailing edge flap (2) is employed per blade (1);
   - said section (8) to which said auxiliary vortex (11) is attached is located at least approximately midway between said section (7) around which the speed circulation is a maximum and said tip section (3) of said blade; and
   - the speed circulation around the blade section (8) to which said auxiliary vortex (11) is attached is at least approximately equal to half said maximum speed circulation.

3. Method according to either one of claims 1 and 2, **characterized in that** said value Ψo of the azimuth of the blades (1) lies between 120° and 150°, reckoned in the direction of rotation of the blades starting from the 0° azimuth which corresponds to the rear part of the longitudinal axis X-X of the aircraft.

4. Method according to any one of claims 1 to 3, **characterized in that** each blade (1) comprises a trailing edge flap (2) which extends as far as the blade tip section (3).

5. Method according to any one of claims 1 to 3, **characterized in that** each blade (1) comprises a trailing edge flap (18) which is separated from said blade tip section (3) by a tip portion (19) of this blade (1).

6. Method according to any one of claims 1 to 5, **characterized in that** the speed circulation is represented by lift information.

7. Method according to any one of claims 1 to 5, **characterized in that** the speed circulation is represented by strain information, measured on said blades.

8. Method according to claims 2 and 6, **characterized in that** said lift information originates from pressure measurements performed on said blades and **in that**, for this purpose, pressure sensors are disposed, in said blades, in said section around which the speed circulation is a maximum, as well as in the blade section located approximately midway between this latter section and the blade tip section.

9. Method according to claims 2 and 7, **characterized in that** strain gauges or the like are disposed, in said blades, in said section around which the speed circulation is a maximum, as well as in the blade section located approximately midway between this latter section and the blade tip section.

10. Method according to any one of claims 2 to 9, **characterized in that** the law of deflection of said flaps is of the type:

$$d\alpha/dt = K (\Gamma 7 - 2\Gamma 8)$$

in which expression:

   d$\alpha$/dt represents the temporal variation of the angle of deflection $\alpha$ of said flaps,
   $\Gamma 7$ is the maximum value of the speed circulation around said blades, for the azimuth Ψo,
   $\Gamma 8$ is the value of the speed circulation around the blade section to which said auxiliary vortex (11) is attached for the azimuth Ψo, and
   K a constant coefficient.

FIG.1

EP 1 104 389 B1

FIG.2

FIG.3

FIG.4